# EUROPÄISCHE PATENTANMELDUNG

(11) **EP 0 701 915 A1**
(43) Veröffentlichungstag der Anmeldung: **20.03.1996**
(21) Anmeldenummer: 94114743.1
(22) Anmeldetag: 19.09.1994
(51) Int. Cl.: B60H 1/00

(54) **Kraftfahrzeug-Klimaanlage**

(71) Anmelder: Valeo Klimasysteme GmbH, 96476 Rodach (DE)
(72) Erfinder: Hildebrand, Reinhard, D-96257 Redwitz (DE)
(74) Vertreter: COHAUSZ HASE DAWIDOWICZ & PARTNER

(57) **Zusammenfassung**

Um mit einfacher Bedienung und schneller Anpassung an unterschiedliche Temperaturverhältnisse eine energiesparende Temperierung des Innenraums eines Kraftfahrzeuges gewährleisten zu können, ist mittels eines einzigen verstellbaren Temperierungs-Stellmittels(T) bei dessen Verstellung in einem ersten Stellbereich, insbesondere im Bereich von 0-30% des gesamten Stellbereichs, unabhängig vom Antriebsmotor des Kraftfahrzeugs ein Kälteerzeuger (KP;VD) von einer hohen Kälteleistung auf eine geringere Kälteleistung sowie in einem letzten Stellbereich ein Nutzwärmeerzeuger (EH bzw.DH) von einer geringeren Wärmeleistung auf eine hohe Wärmeleistung verstellbar; gemäß einem bevorzugten Ausführungsbeispiel ist der erste Stellbereich von dem letzten Stellbereich durch einen mittleren Stellbereich mit luftseitiger Verstellung in einem Mischraum (MR) und/oder wasserseitiger Verstellung in einem Wärmetauscher (WT) getrennt.

## Beschreibung

Die Erfindung betrifft eine Kraftfahrzeug-Klimaanlage gemäß Patentanspruch 1.

In bekannten Klimaanlagen wird zur Kälteerzeugung bzw. Entfeuchtung bei zu hoher Innentemperatur von einem mit dem Antriebsmotor des Kraftfahrzeuges gekuppelten Kälteerzeuger ausgegangen und zur Wärmeerzeugung bei zu niedriger Innentemperatur der von dem Kühlkreislauf des Antriebsmotors des Kraftfahrzeuges und somit von dessen Abwärme gespeiste Wärmetauscher zugeschaltet. Die Steuerung bzw. Regelung der Innentemperatur erfolgt dabei im wesentlichen durch luftseitige Einstellung durch Verstellen einer Mischluftklappe am Eingang eines Mischraums, durch die das Verhältnis von eintretender Kaltluft zu eintretender Warmluft veränderbar ist und/oder bei wasserseitiger Einstellung durch das Verstellen eines Ventils, durch das der Zufluß der durch Anwärme des Kraftfahrzeugmotors erwärmten Kühlflüssigkeit zu dem Wärmetauscher veränderbar ist. Eine derartige Klimaamlage erfordert einen hohen Energie- und Bedienungsaufwand und kann auf unterschiedliche Temperaturverhältnisse im Innenraum des Kraftfahrzeuges nur träge oder sogar überhaupt nicht reagieren.

Eine demgegenüber schnellere Anpassung an unterschiedliche Temperaturverhältnisse bei gleichzeitig wesentlich vereinfachter Bedienung und verringertem Energieaufwand kann erfindungsgemäß durch die Lehre des Anspruchs 1 erreicht werden; vorteilhafte Ausgestaltungen der Erfindung sind jeweils Gegenstand der Unteransprüche.

Durch die Verwendung eines unabhängig vom Motorantrieb des Kraftfahrzeuges selbständig regel- bzw. steuerbaren Kälteerzeugers einerseits und eines regel- bzw. steuerbaren gesonderten und somit von der jeweiligen Abwärmemenge des Kühlmittels des Motorantriebes unabhängigen Nutzwärmeerzeugers ist eine an die jeweilige Temperatur des Inneraums mit nur unbedingt notwendigem Energieaufwand anpaßbare Temperierung schnell und durch die Einstellverbindung des Kälteerzeugers bzw. des Nutzwärmeerzeugers mit einem einzigen Stellmittel auch auf einfache Weise möglich.

Die vorbeschriebene erfindungsgemäße Kraftfahrzeug-Klimaanlage mit einem an den Stellbereich des Kälteerzeugers anschließenden Stellbereich des Nutzwärmerzeugers eignet sich insbesondere für Fahrzeuge ohne übliche luftseitige Einstellung durch eine Mischluftklappe und/oder wasserseitige Einstellung eines von Abwärme des Kühlwassers des Motorantriebs des Kraftfahrzeugs gespeisten Wärmetauscher und somit insbesondere für ohne Abwärmeausnutzung betriebene Klimaanlagen. Bei Verwendung für Kraftfahrzeuge mit alleinigem oder teilweisem Antrieb durch einen Verbrennungsmotor mit Kühlwasserkreislauf durch einen Wärmetauscher in der Klimaanalge und einer luftseitigen Temperierungseinstellung durch eine Mischluftklappe in einem Mischraum, dem eingangsseitig einerseits Frischluft bzw. andererseits durch einen kühlwassergespeisten Wärmetauscher erwärmte Luft zuführbar ist, wird nach einem bevorzugten Ausführungsbeispiel der Erfindung zwischen dem ersten Stellbereich und dem letzten Stellbereich ein mittlerer Stellbereich mit luftseitiger Verstellung durch zumindest eine Mischluftklappe in einem Mischraum und/oder mit wasserseitiger Verstellung durch zumindest ein Ventil in einem abwärmegespeisten Wärmetauscher vorgesehen.

Der erste Stellbereich erstreckt sich bevorzugt über 0-30% des gesamten Stellbereichs des einzigen Temperierungs-Stellmittels und der Stellbereich des Nutzwärmeerzeugers bei Vorhandensein eines mittleren Stellbereichs mit luftseitiger bzw. wasserseitiger Verstellung auf einen Stellbereich von 60-100% des gesamten Stellbereichs des einzigen Temperierungs-Stellmittels.

Die Erfindung sowie weitere vorteilhafte Ausgestaltungen der Erfindung gemäß Merkmalen der Unteransprüche werden im folgenden anhand schematisch dargestellter Ausführungsbeispiele in der Zeichnung näher erläutert; darin zeigen:
- FIG 1,2: zwei unterschiedliche Ansichten der Frontblende eines Bediengerätes mit jeweils einem einzigen Temperierungs-Stellmittel;
- FIG 3,5,7,9: vier verschiedene Ausstattungsvarianten eines erfindungsgemäßen Klimagerätes;
- FIG 4,6,8,10: die jeweiligen Betätigungsverläufe des Temperierungs-Stellmittels der Klimaanlage über dessen gesamten Stellbereichs.

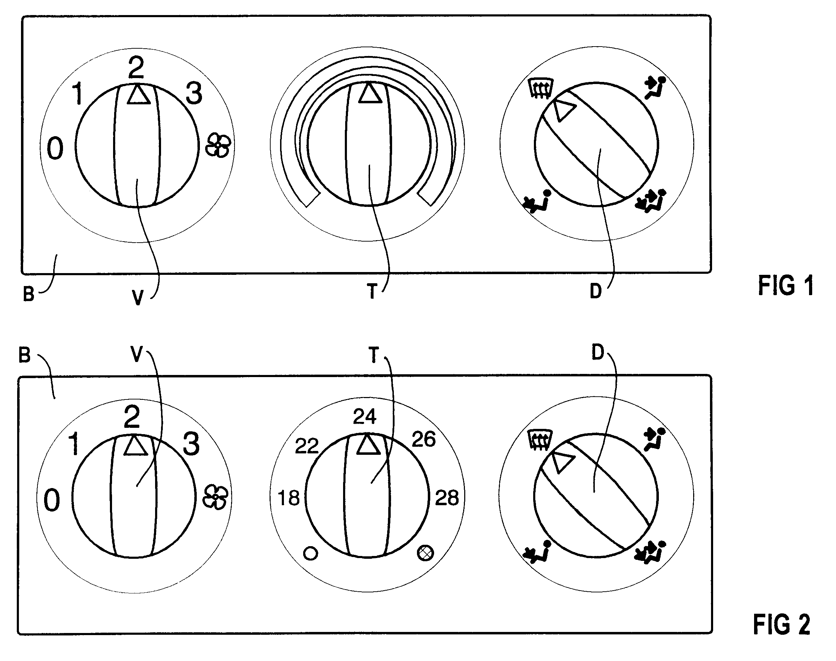

FIG 1,2 zeigen jeweils die Frontblende einer in der Mittelebene, insbesondere im Armaturenbrett, eines Kraftfahrzeuges angebrachten zentralen Bedieneinheit B mit einem Ventilatorschalter V zur Luftmengensteuerung, über den z.B. die Drehzahlstufen eines zentralen Ventilators am Eingang des Heiz- bzw. Klimagerätes einstellbar sind, weiterhin mit einem Luftverteil-Einstellelement D mit vier, mit entsprechenden die jeweilige Strömungsrichtung kennzeichnenden Symbolen sowie mit einem mittigen Temperierungs-Stellmittel T zur Einstellung einer gewünschten Temperatur im Innenraum des Kraftfahrzeuges. FIG 1 zeigt eine Bedieneinheit zur Steuerung und FIG 2 eine Bedieneinheit zur Regelung der jeweiligen Innentemperatur. Das als Drehknopf ausgebildete Temperierungs-Stellmittel T ist über einen Stellbereich von ca. 270° verstellbar.

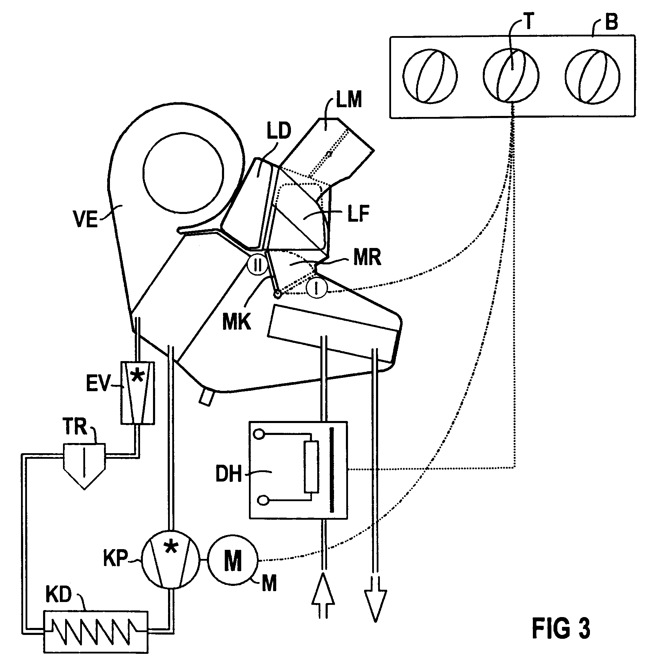

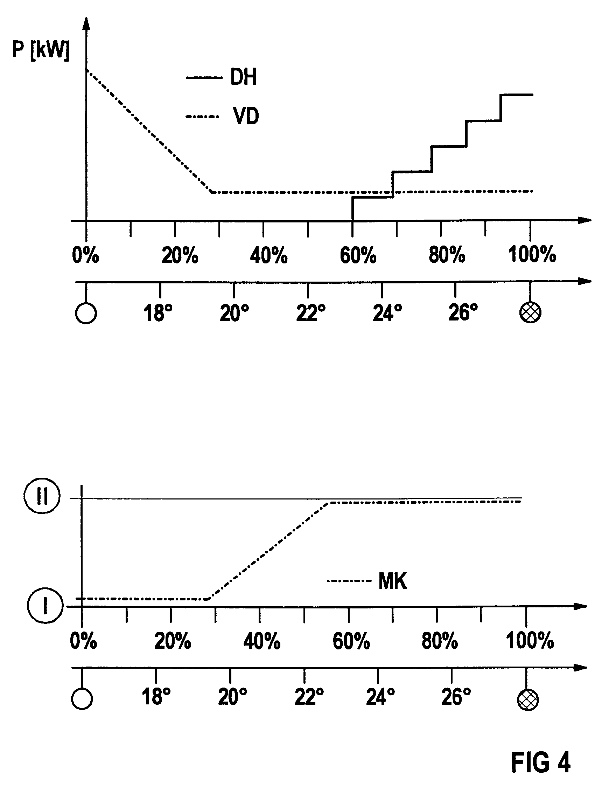

FIG 3,4 zeigen ein erstes Ausführungsbeispiel einer erfindungsgemäßen Klimaanlage; dabei wird ausgegangen von einem grundsätzlich, z.B. durch die EP-B2-0 016 104, bekannten Aufbau mit in einem Kunststoffgehäuse eingangsseitig angeordnetem Ventilator VE, einem im Luftstrom folgenden Verdampfer VD, einer anschließenden Aufteilung des Luftstroms zu einem Mischraum MR entweder als direkter Frischluftstrom oder als über einen durch die Kühlflüssigkeit des Antriebsmotors des Kraftfahrzeuges gespeisten Wärmetauscher erwärmten Warmluftstrom und mit einem anschließenden Austritt der temperierten Luftströme in einen Defrost-Luftkanal LD bzw. einen Mittelebenen-Luftkanal LM bzw. einen Fußraum-Luftkanal LF. Dabei kann die Temperierung rein luftseitig durch die Verstellung einer Mischluftklappe MK am Eingang des Mischraums MR dadurch erfolgen, daß die Mischluftklappe MK mit Zwischenstellungen zwischen einer ersten Schließstellung I mit vollständigem Verschluß des Warmluftstroms und vollständigem Zutritt des Frischluftstroms einerseits und einer zweiten Endstellung II mit vollständigem Verschluß des Frischluftstroms und vollständiger Freigabe des Warmluftstroms verstellbar ist.

Erfindungsgemäß ist im Kühlkreislauf neben den üblichen Bauteilen eines Verdampfers VD, eines Expansionsventils EV, eines Trockners TR sowie eines Kondensators KD jeweils ein vom Antriebsmotor des Kraftfahrzeuges unabhängig steuerbarer bzw. regelbarer, von einem Elektromotor M angetriebener Kompressor KP vorgesehen; weiterhin ist erfindungsgemäß in Ergänzung zu dem durch Abwärme gespeisten Wärmetauscher WT in dessen Kreislauf ein Nutzwärmeerzeuger in Form eines Durchlauferhitzer DH angeordnet, der von dem einzigen Temperierungs-Stellmittel T in einem letzten Stellbereich einstellbar ist.

Wie aus den Funktionsverläufen gemäß FIG 4 ersichtlich, erfolgt die Verstellung des Kälteerzeugers (VD;KP) über die jeweilige Einstellung des Kompressors KP in einem ersten Stellbereich, vorzugsweise im Bereich von 0-30% seines gesamten Stellbereichs und insbesondere kontinuierlich, von einer oberen Kälteleistung auf eine geringere, zweckmäßigerweise noch eine hinreichende Entfeuchtung der Innenraumluft gewährleistenden Kälteleistung; selbstverständlich wird die Kühlung bei Erreichen von mit einer Vereisungsgefahr verbundener Temperatur selbsttätig abgeschaltet. In einem letzten Stellbereich, vorzugsweise von ca. 60-100% des gesamten Stellbereichs des einzigen Temperierungs-Stellmittels T und insbesondere stufenweise, wird ein der Nutzwärmeerzeuger in Form eines Durchlauferhitzers DH von einer unteren Wärmeleistung auf eine höhere Wärmeleistung verstellt. Bei an sich vorhandener luftseitiger Temperierung mittels einer Mischluftklappe MK und eines kühlmittelerwärmten Wärmetauschers WT ist zwischen dem ersten Stellbereich und dem letzten Stellbereich ein mittlerer Stellbereich mit luftseitiger Verstellung der Mischluftklappe MK von einer ersten Endstellung I mit vollständigem Verschluß des Mischraums MR gegenüber dem Warmluftstrom des Wärmetauschers WT bzw. völliger Öffnung gegenüber dem eingangsseitigen Frischluftstrom in eine zweite Endstellung II mit völliger Öffnung des Mischraums MR gegenüber dem Warmluftstrom des Wärmetauschers WT und damit völligem Verschluß gegenüber dem Frischluftstrom vorgesehen, wobei die Verstellung zwischen der ersten Endstellung I und der zweiten Endstellung II zweckmäßigerweise kontinuierlich erfolgt. In den Funktionsabläufen der durch das einzige Temperierungs-Stellmittel T erfolgenden Betätigungsfolgen beziehen sich die Prozentangaben auf den gesamten Stellbereich des Temperierungs-Stellnmittels T gemäß FIG 1 und die Temperaturangaben auf den Temperaturstellbereich gemäß FIG 2.

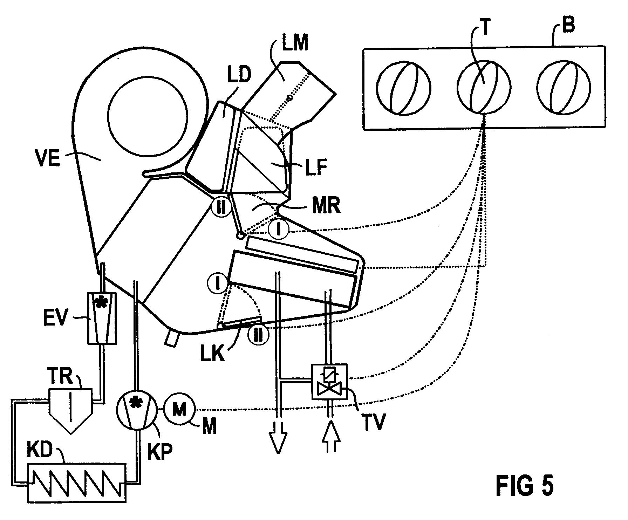

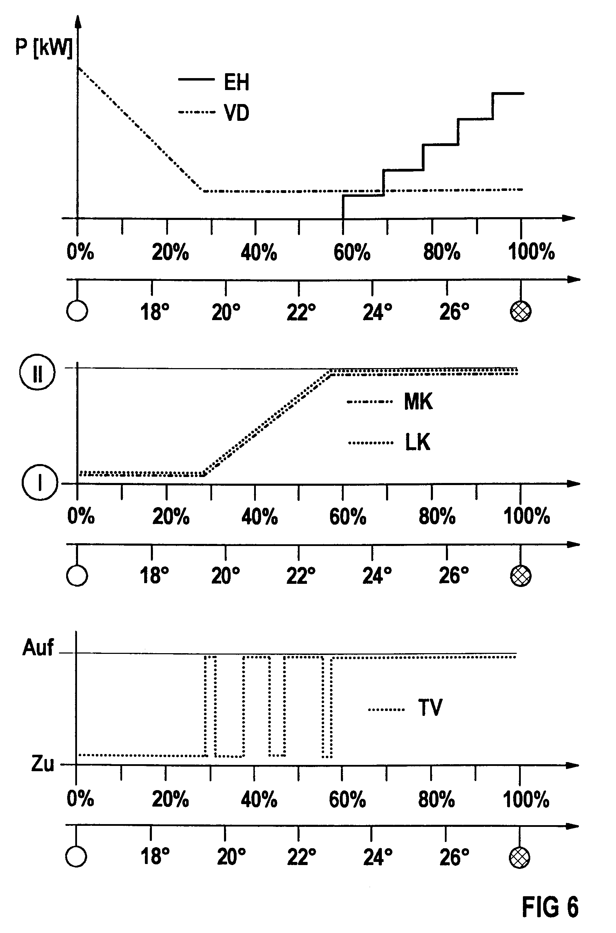

Gemäß FIG 5,6 ist im Unterschied zu FIG 3,4 als Nutzwärmeerzeuger eine in Abhängigkeit vom Temperierungs-Stellmittel T in dessen letztem Stellbereich einstellbare gesonderte elektrische Heizung, insbesondere eine PTC-Heizung, im Luftstrom vorzugsweise hinter dem kühlwassergespeisten Wärmetauscher WT angeordnet. Zusätzlich zur Mischluftklappe MK ist eine weitere Luftklappe LK am Eingang des Wärmetauschers WT vorgesehen, die mit Zwischenstellungen zwischen einer ersten Endstellung I mit vollständigem Verschluß des Zugangs zum Wärmetauschers WT und einer zweiten Endstellung II mit vollständiger Öffnung zu dem Wärmetauscher WT verstellbar ist; die Luftklappe LK wird dabei üblicherweise synchron zur Mischluftklappe MK betätigt.

Wie aus den Funktionsverläufen gemäß FIG 6 ersichtlich, wird zur Abwärmenutzung in dem mittleren Stellbereich erfindungsgemäß die zusätzliche Luftklappe LK zusammen mit der Mischluftklappe MK, vorzugsweise kontinuierlich, von der ersten Endstellung I in die zweite Endstellung II verstellt bzw. mittels eines Taktventils TV mit Bypass, vorzugsweise mit einem im Sinne einer kontinuierlichen Verstellung variablen Taktverhältnis, von einer vollständigen Schließstellung zu Beginn des mittleren Stellbereichs bis zu einer vollständigen Öffnungsstellung zu Ende des mittleren Stellbereiches die Kühlmittelzufuhr zum Wärmetauscher WT entsprechend verändert.

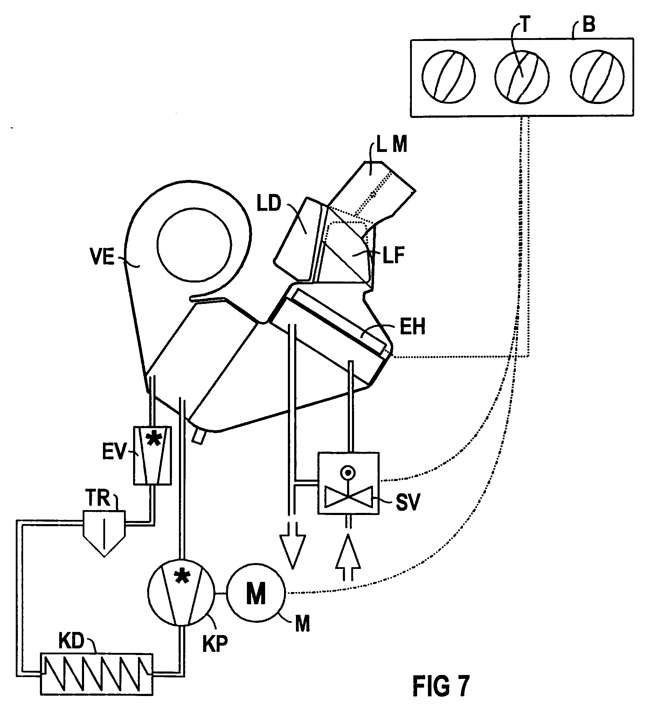

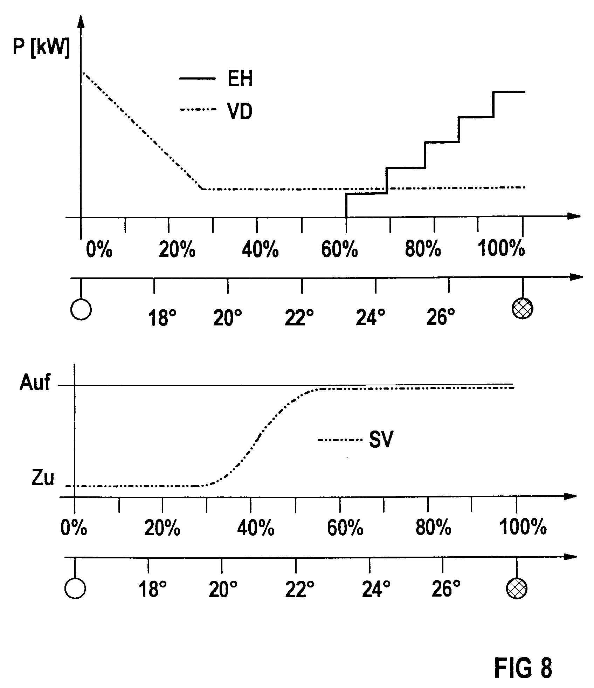

FIG 7,8 zeigen eine erfindungsgemäße Klimaanlage ohne luftseitige Regelung bzw. Steuerung mittels einer Mischluftklappe MK bzw. ohne eine Luftklappe LK, jedoch mit einem durch Anschluß an den Kühlkreislauf des Antriebsmotors des Kraftfahrzeuges mit Abwärme speisbaren Wärmetauscher WT, der eingangsseitig dauernd vom gesamten Luftstrom beströmt wird. Zur schnellen Einstellung der jeweils gewünschten Temperierung durch das einzige Temperierungs-Stellmittel T ist wiederum ein vom Antriebsmotor des Kraftfahrzeuges unabhängig einstellbarer Kompressor KP für den Verdampfer VD sowie ein Nutzwärmeerzeuger in Form einer elektrischen Heizung EH vorgesehen. Die Kältleistungseinstellung erfolgt wiederum in einem bevorzugten Stellbereich von 0-30% des gesamten Stellbereichs des einzigen Temperierungs-Stellmittels T; die Wärmeleistungseinstellung von einer kleineren auf eine höhere Leistung durch die elektrische Heizung EH liegt in einem letzten Stellbereich, vorzugsweise zwischen 60-100% des gesamten Stellbereichs, des -Temperierungs-StellmittelS T. Im mittleren Stellbereich ist eine wasserseitige Einstellung des zum Wärmetauschers WT fließenden Kühlwassers mittels eines Scheibenventils SV vorgesehen, das vorzugsweise kontinuierlich, von einer völligen Schließstellung des Zuflusses zu dem Wärmetauscher WT zu Beginn des mittleren Stellbereichs bis zu einer vollständigen Öffnungsstellung des Zuflusses zu dem Wärmetauscher WT zu Ende des mittleren Stellbereichs des einzigen Temperierungs-Stellmittel T veränderbar ist.

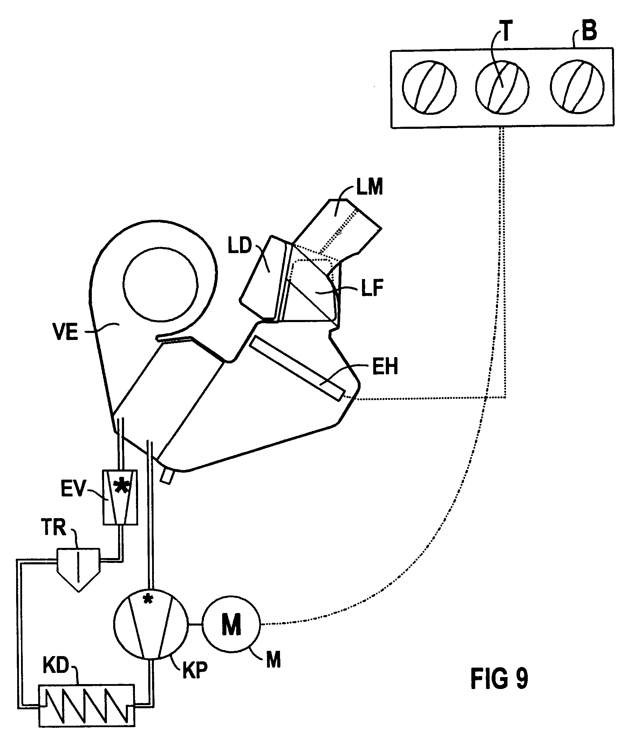

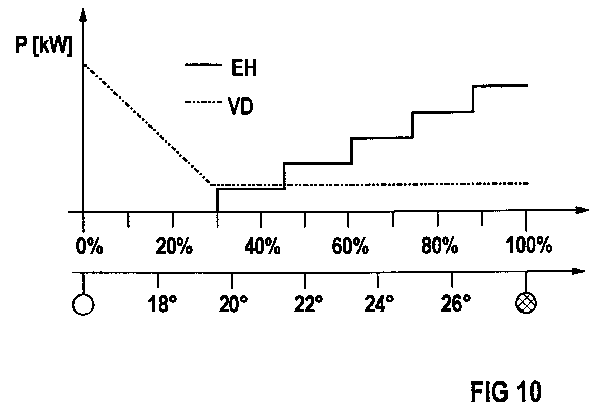

FIG 9,10 zeigen eine erfindungsgemäße Klimaanlage, die insbesondere zum Einsatz in Fahrzeugen ohne Abwärmenutzung für die Klimaanlage vorgesehen ist, bei denen ein an den Kühlkreislauf angeschlossener, durch Abwärme des Antriebsmotors des Kraftfahrzeuges gespeister Wärmetauscher in der Regel entfällt.

Die energiesparende, schnelle und einfache Temperierung durch das einzige Temperierungs-Stellmittel erfolgt im vorliegenden Fall einerseits in einem ersten Stellbereich durch Verstellen der Kälteleistung des Kälterzeugers von einer höheren auf eine niedere, insbesondere gerade noch zur Entfeuchtung der Innenraumluft geeigneten Kälteleistung und einer Erhöhung der Wärmeleistung der elektrischen Heizung EH in einem anschließenden Stellbereich von einer geringeren Wärmeleistung auf eine höhere Wärmeleistung; zweckmäßigerweise ist für den Kälteerzeuger eine kontinuierliche und für den Wärmeerzeuger eine stufenweise Verstellung vorgesehen.

## Patentansprüche

1. Kraftfahrzeug-Klimaanlage mit über ein einziges Temperierungs-Stellmittel (T) einstellbarer Temperierung des Innenraums zwischen einer unteren Kühltemperatur einerseits und einer oberen Heiztemperatur andererseits durch entsprechende Kühlung bzw. Erwärmung eines in den Innenraum geförderten Luftstroms, wobei mittels Verstellung des TemperierungsStellmittels (T) in einem ersten Stellbereich, insbesondere im Bereich von 0-30% des gesamten Stellbereichs, ein Kälteerzeuger (VD;KP) von einer hohen Kälteleistung auf eine geringere Kälteleistung sowie in einem letzten Stellbereich ein Nutzwärmeerzeuger (EH bzw.DH) von einer geringeren Wärmeleistung auf eine höhere Wärmeleistung verstellbar ist.

2. Kraftfahrzeug-Klimaanlage nach Anspruch 1 mit einem zwischen dem ersten Stellbereich und dem letzten Stellbereich vorgesehenen mittleren Stellbereich mit luftseitiger Verstellung durch zumindest eine Mischluftklappe (MK) in einem Mischraum (MR) und/oder mit wasserseitiger Verstellung durch zumindest ein Ventil (TV;SV) in einem Wärmetauscher (WT).

3. Kraftfahrzeug-Klimaanlage nach Anspruch 2 mit einem letzten Stellbereich im Bereich von 60-100% des gesamten Stellbereichs des Stellmittels (T).

4. Kraftfahrzeug-Klimaanlage nach zumindest einem der Ansprüche 1-3 mit einer kontinuierlichen Verstellung des Kälteerzeugers (VD;KP) während des ersten Stellbereichs.

5. Kraftfahrzeug-Klimaanlage nach zumindest einem der Ansprüche 1-4 mit einer stufenweisen Verstellung des, vorzugsweise von dem Kühlkreislauf des Kraftfahrzeuges unabhängigen, Nutzwärmeerzeugers (EH bzw.DH) während des letzten Stellbereichs.

6. Kraftfahrzeug-Klimaanlage nach zumindest einem der Ansprüche 1-5 mit einem Mischraum (MR) mit ausgangsseitigen Verteilungs-Luftkanälen (LM bzw.LD bzw.LF) zum Innenraum des Kraftfahrzeuges und mit einer eingangsseitigen Mischluftklappe (MK), durch deren Verstellen mit Zwischenstellungen zwischen einer ersten Endstellung (I) und einer zweiten Endstellung (II) entweder Kaltluft bzw. Frischluft einerseits oder Warmluft andererseits zuführbar und die zu Beginn des mittleren Stellbereichs in die erste Endstellung (I) und zu Ende des Zwischen-Stellbereichs in die zweite Endstellung (II), insbesondere kontinuierlich, verstellt ist.

7. Kraftfahrzeug-Klimaanlage nach Anspruch 6 mit einer weiteren Luftklappe (LK), durch deren Verstellen mit Zwischenstellungen zwischen einer ersten Endstellung (I) und einer zweiten Endstellung (II) die Luftzufuhr zu dem Wärmetauscher (WT) voll gesperrt bzw. voll geöffnet und die zu Beginn des mittleren Stellbereichs in die erste Endstellung (I) und zu Ende des mittleren Stellbereichs in die zweite Endstellung (II), insbesondere kontinuierlich, verstellt ist.

8. Kraftfahrzeug-Klimaanlage nach zumindest einem der Ansprüche 1-7 mit durch einen Nutzwärmeerzeuger (EH bzw.DH) und/oder durch einen durch Abwärme des Kraftfahrzeuges erwärmbaren Wärmetauscher (WT) mit wasserseitiger Verstellung, insbesondere mittels eines Ventils (TV;SV) und eines Bypasses im Sinne einer, insbesondere kontinuierlichen, Verstellung des Ventils (TV;SV) zwischen einer Schließstellung zu Beginn des mittleren Stellbereichs und einer Öffnungsstellung zu Ende des mittleren Stellbereichs.

9. Kraftfahrzeug-Klimaanlage nach Anspruch 8 mit einem Taktventil (TV) mit einem im Sinne einer kontinuierlichen Verstellung variablen Taktverhältnis.

10. Kraftfahrzeug-Klimaanlage nach zumindest einem der Ansprüche 1-9 mit einem in Abhängigkeit von dem TemperierungsStellmittel (T) in dessen letztem Stellbereich von minimaler auf maximale Wärmeleistung verstellbaren, bei Vorhandensein eines Wärmetauschers WT vorzugsweise hinter diesem angeordneten, elektrischen Heizelement (EH), insbesondere einem PTC-Heizelement.

11. Kraftfahrzeug-Klimaanlage nach zumindest einem der Ansprüche 1-10 mit einem in den Kreislauf des Wärmetauschers (WT) integrierten, in Abhängigkeit von dem Temperierungs-Stellmittel (T) in dem letzten Stellbereich von minimaler auf maximale Wärmeleistung verstellbaren elektrischen Durchlauferhitzer (DH).

12. Kraftfahrzeug-Klimaanlage nach einem der Ansprüche 1-11 mit einem unabhängig von dem Motorantrieb des Kraftfahrzeuges von einem Elektromotor angetriebenen, in Abhängigkeit von dem Temperierungs-Stellmittel (T) in dem ersten Stellbereich von maximaler und auf minimale Kälteleistung verstellbaren Kompressor für den Verdampfer (VD).
